# EUROPÄISCHE PATENTSCHRIFT

(11) **EP 2 525 481 B1**
(45) Veröffentlichungstag und Bekanntmachung des Hinweises auf die Patenterteilung: **01.02.2017**
(21) Anmeldenummer: 11166526.1
(22) Anmeldetag: 18.05.2011
(51) Int. Cl.: H02M 5/458

(54) **Steuereinrichtung für einen Zwischenkreisumrichter und Zwischenkreisumrichter selbst**
Control device for a circuit inverter and inverter
Dispositif de commande pour un convertisseur indirect et convertisseur indirect

(43) Veröffentlichungstag der Anmeldung: 21.11.2012
(73) Patentinhaber: Siemens Aktiengesellschaft, 80333 München (DE)
(72) Erfinder: Dietz, Bernd, 91074, Herzogenaurach (DE); Köpken, Hans-Georg, 91056, Erlangen (DE); Reichl, Gerald, 91056, Erlangen (DE); Schierling, Hubert, 91052, Erlangen (DE); Schäfers, Elmar, 90763, Fürth (DE); Stoiber, Dietmar, 90763, Fürth (DE)

(56) Entgegenhaltungen:
- EP-A2- 1 744 445
- DE-A1- 19 532 164
- DE-A1-102009 014 495
- DE-B3-102006 033 562
- JP-A- 2002 051 589
- US-A- 5 373 223

## Beschreibung

Die vorliegende Erfindung betrifft eine Steuereinrichtung für einen Zwischenkreisumrichter,
- wobei der Zwischenkreisumrichter einen Gleichspannungszwischenkreis aufweist, in dem ein Zwischenkreiskondensator angeordnet ist,
- wobei der Zwischenkreisumrichter mindestens einen Speiseumrichter aufweist, über den aus einem Versorgungsnetz elektrische Energie in den Gleichspannungszwischenkreis eingespeist wird,
- wobei der Zwischenkreisumrichter mindestens einen Lastumrichter aufweist, über den einer Nutzlast aus dem Gleichspannungszwischenkreis elektrische Energie zugeführt wird,
- wobei der Zwischenkreisumrichter mindestens einen Pufferumrichter aufweist, über den eine rotierende Schwungmasse zum bidirektionalen Energieaustausch an den Gleichspannungszwischenkreis angekoppelt ist,
- wobei die Steuereinrichtung den Speiseumrichter, den Lastumrichter und den Pufferumrichter steuert.

Die vorliegende Erfindung betrifft weiterhin einen Zwischenkreisumrichter,
- wobei der Zwischenkreisumrichter einen Gleichspannungszwischenkreis aufweist, in dem ein Zwischenkreiskondensator angeordnet ist,
- wobei der Zwischenkreisumrichter mindestens einen Speiseumrichter aufweist, über den aus einem Versorgungsnetz elektrische Energie in den Gleichspannungszwischenkreis eingespeist wird,
- wobei der Zwischenkreisumrichter mindestens einen Lastumrichter aufweist, über den einer Nutzlast aus dem Gleichspannungszwischenkreis elektrische Energie zugeführt wird,
- wobei der Zwischenkreisumrichter mindestens einen Pufferumrichter aufweist, über den eine rotierende Schwungmasse zum bidirektionalen Energieaustausch an den Gleichspannungszwischenkreis angekoppelt ist,
- wobei der Zwischenkreisumrichter eine Steuereinrichtung aufweist, die den Speiseumrichter, den Lastumrichter und den Pufferumrichter steuert.

Eine derartige Steuereinrichtung und ein derartiger Zwischenkreisumrichter sind beispielsweise aus der DE 10 2006 033 562 B3 , der US 5373223, der EP 1744445 oder der JP 2002051589 bekannt.

Viele Nutzlasten - beispielsweise die Antriebe von Servopressen - zeichnen sich dadurch aus, dass die durch Dynamik (Beschleunigen und Bremsen) und externe Belastung (beispielsweise einen Umformprozess) erforderliche Leistung in großem Umfang schwankt. Leistungsspitzen können um ein Mehrfaches über einer mittleren erforderlichen Leistung liegen. Im Stand der Technik ist man bestrebt, die Anschlussleistung und Einspeisung des Zwischenkreisumrichters nur an der relativ niedrigen mittleren Leistung zu orientieren. Um die Leistungsspitzen abzudecken, ist eine Energiespeicherung (Pufferung) innerhalb oder außerhalb des Zwischenkreisumrichters erforderlich.

Die Energiespeicherung erfolgt entweder elektrisch über eine entsprechende Dimensionierung des Zwischenkreiskondensators oder mechanisch über eine an den Zwischenkreis angebundene rotierende Schwungmasse. Bei größeren Nutzlasten, beispielsweise bei Großpressen mit einer Presskraft von 800 Tonnen und mehr, ist eine Kondensatorenergiespeicherung unwirtschaftlich.

Die Aufgabe der vorliegenden Erfindung besteht darin, Möglichkeiten zu schaffen, einen Zwischenkreisumrichter effizient und betriebssicher zu betreiben.

Die Aufgabe wird durch eine Steuereinrichtung mit den Merkmalen des Anspruchs 1 gelöst. Vorteilhafte Ausgestaltungen der erfindungsgemäßen Steuereinrichtung sind Gegenstand der abhängigen Ansprüche 2 bis 9.

Erfindungsgemäß ist bei einer Steuereinrichtung der eingangs genannten Art vorgesehen,
- dass die Steuereinrichtung einen ersten Spannungsregler implementiert, in dem anhand einer Sollspannung und einer über dem Zwischenkreiskondensator abfallenden Istspannung ein Sollstrom für den Speiseumrichter ermittelt wird und von dem der Speiseumrichter entsprechend angesteuert wird,
- dass die Steuereinrichtung einen Drehzahlregler implementiert, in dem anhand einer Solldrehzahl und einer Istdrehzahl der Schwungmasse ein erster Sollmomentanteil für die Schwungmasse ermittelt wird,
- dass die Steuereinrichtung einen zweiten Spannungsregler implementiert, in dem anhand der Sollspannung und der Istspannung ein zweiter Sollmomentanteil für die Schwungmasse ermittelt wird, und
- dass der erste und der zweite Sollmomentanteil zu einem Sollmoment addiert werden und der Pufferumrichter entsprechend angesteuert wird.

In vielen Fällen oszilliert die momentane Leistungsanforderung mit einer Periode zwischen einem Minimalwert und einem Maximalwert. Vorzugsweise ist der erste Spannungsregler als PI-Regler ausgebildet, der eine Proportionalverstärkung und eine Nachstellzeit aufweist. Die Proportionalverstärkung und die Nachstellzeit des ersten Spannungsreglers sind derart bestimmt, dass der erste Spannungsregler einen Sollwertsprung während einer Periode nur zu einem geringen Teil ausregelt.

Der zweite Spannungsregler ist vorzugsweise als P-Regler ausgebildet. Eine Proportionalverstärkung des zweiten Spannungsreglers ist derart bestimmt, dass der zweite Spannungsregler einen Sollwertsprung während eines Teils einer Periode zu einem Großteil ausregelt.

In einer weiter bevorzugten Ausgestaltung der Steuereinrichtung ist vorgesehen,
- dass die Steuereinrichtung zusätzlich einen Vorsteuerkreis implementiert,
- dass dem Vorsteuerkreis die momentane Leistungsanforderung zugeführt wird,
- dass der Vorsteuerkreis die momentane Leistungsanforderung hochpassfiltert und
- dass der Vorsteuerkreis anhand der hochpassgefilterten momentanen Leistungsanforderung ein Vorsteuersignal ermittelt, das zusätzlich zum ersten und zweiten Sollmomentanteil additiv in das Sollmoment eingeht.

Diese Vorgehensweise führt zu einem noch stabileren Betriebsverhalten.

Falls der Vorsteuerkreis vorhanden ist, ist es möglich, dass der zweite Spannungsregler und der Vorsteuerkreis stets aktiviert sind. Alternativ ist es möglich, dass die Steuereinrichtung derart ausgebildet ist, dass in einem ersten Betriebszustand der Steuereinrichtung sowohl der zweite Spannungsregler als auch der Vorsteuerkreis aktiviert sind und in einem zweiten Betriebszustand der Steuereinrichtung alternativ der zweite Spannungsregler aktiviert ist und der Vorsteuerkreis deaktiviert ist oder der zweite Spannungsregler deaktiviert ist und der Vorsteuerkreis aktiviert ist. In diesem Fall sind vorzugsweise der erste Betriebszustand der Steuereinrichtung der laufende Betrieb des Zwischenkreisumrichters und der zweite Betriebszustand der Steuereinrichtung der Anlauf des Zwischenkreisumrichters.

In einer besonders bevorzugten Ausgestaltung der vorliegenden Erfindung ist vorgesehen,
- dass der Vorsteuerkreis zusätzlich einen Integrator und ein dem Integrator nachgeschaltetes Verzögerungsglied umfasst,
- dass das Vorsteuersignal dem Integrator zugeführt wird und
- dass das integrierte und zeitverzögerte Vorsteuersignal dem Drehzahlregler als zusätzliches Eingangssignal zugeführt wird.

Der Drehzahlregler ist vorzugsweise als PI-Regler ausgebildet, der eine Proportionalverstärkung und eine Nachstellzeit aufweist. In dem Fall, dass der Vorsteuerkreis zusätzlich den Integrator und das dem Integrator nachgeschaltete Verzögerungsglied umfasst, können die Proportionalverstärkung und die Nachstellzeit des Drehzahlreglers derart bestimmt sein, dass der Drehzahlregler einen Sollwertsprung während eines Teils einer Periode zu einem Großteil ausregelt. Alternativ können die Proportionalverstärkung und die Nachstellzeit des Drehzahlreglers derart bestimmt sein, dass der Drehzahlregler einen Sollwertsprung während einer Periode nur zu einem geringen Teil ausregelt.

Die Aufgabe wird weiterhin durch einen Zwischenkreisumrichter mit den Merkmalen des Anspruchs 10 gelöst. Erfindungsgemäß ist bei einem Zwischenkreisumrichter der eingangs genannten Art vorgesehen, dass die Steuereinrichtung wie oben stehend beschrieben ausgebildet ist.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: einen Zwischenkreisumrichter,
- FIG 2: einen möglichen Leistungsverlauf,
- FIG 3: eine Grundausgestaltung einer Steuereinrichtung,
- FIG 4 und 5: mögliche Ausgestaltungen der Steuereinrichtung von FIG 3,
- FIG 6 und 7: mögliche Ausgestaltungen eines Hochpassfilters und
- FIG 8: eine mögliche Ausgestaltung eines Aufschaltungsblocks.

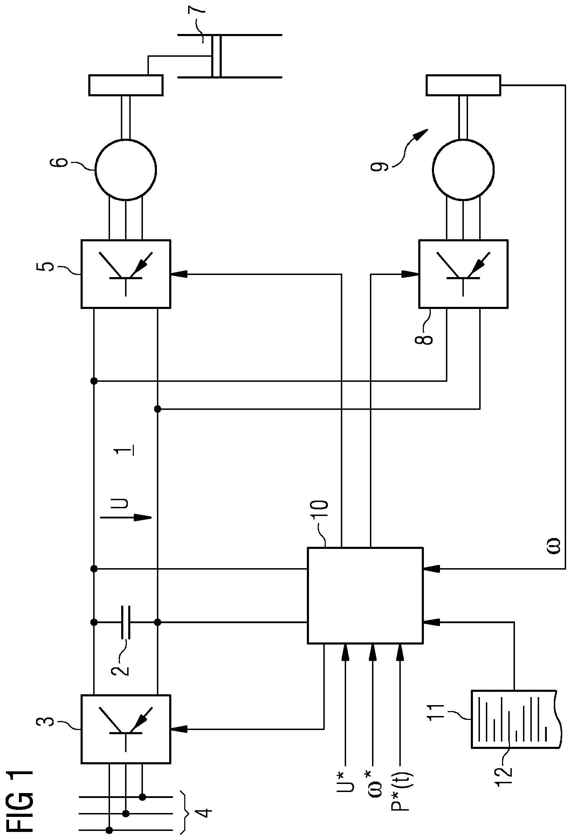

Gemäß FIG 1 weist ein Zwischenkreisumrichter einen Gleichspannungszwischenkreis 1 auf. In dem Gleichspannungszwischenkreis 1 ist ein Zwischenkreiskondensator 2 angeordnet. Über dem Zwischenkreiskondensator 2 fällt eine Istspannung U ab.

Der Zwischenkreisumrichter weist weiterhin mindestens einen Speiseumrichter 3 auf. Über den Speiseumrichter 3 wird aus einem Versorgungsnetz 4 elektrische Energie in den Gleichspannungszwischenkreis 1 eingespeist. Der Speiseumrichter 3 ist in der Regel ein gesteuerter Umrichter. Er weist als Umrichterelemente in der Regel GTOs (= gate turn off-Thyristoren) oder - besonders bevorzugt - IGBTs (= Insulated Gate Bipolar Transistors) auf.

Der Zwischenkreisumrichter weist weiterhin mindestens einen Lastumrichter 5 auf. Über den Lastumrichter 5 wird einer Nutzlast 6 aus dem Gleichspannungszwischenkreis 1 elektrische Energie zugeführt.

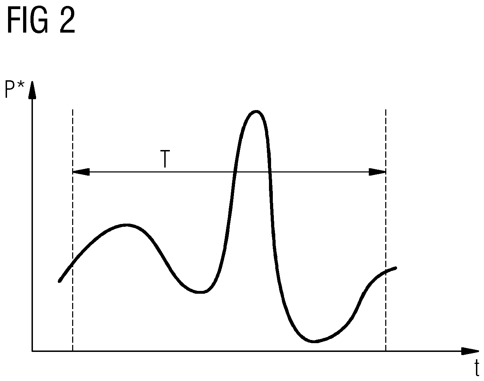

Die Nutzlast 6 kann nach Bedarf ausgebildet sein. In vielen Fällen wird die Nutzlast 6 periodisch betrieben. In diesem Fall oszilliert eine momentane Leistungsanforderung P* der Nutzlast 6 gemäß FIG 2 als Funktion der Zeit t mit einer Periode T zwischen einem Minimalwert Pmin und einem Maximalwert Pmax. FIG 2 zeigt rein beispielhaft einen möglichen Verlauf der momentanen Leistungsanforderung P*. Der zeitliche Verlauf der momentanen Leistungsanforderung P* und ggf. auch andere zeitliche Verläufe wie beispielsweise ein Geschwindigkeitsverlauf können von einem Benutzer nach Bedarf vorgegeben werden.

Für praktische Anwendungen liegt der Maximalwert oftmals oberhalb von einem Megawatt. Der Minimalwert Pmin liegt entweder im (positiven) niedrigen Kilowattbereich oder ist in manchen Fällen sogar negativ. Falls der Minimalwert negativ ist, kann für negative momentane Leistungsanforderungen P* ein Rückspeisen von elektrischer Energie in den Gleichspannungszwischenkreis 1 erfolgen.

Ein typisches Beispiel einer Nutzlast 6 ist gemäß FIG 1 eine Synchronmaschine, welche ihrerseits einen Pressenstempel 7 gemäß einem vorgegebenen Bewegungsmuster auf und ab bewegt.

Der Zwischenkreisumrichter weist weiterhin mindestens einen Pufferumrichter 8 auf. Über den Pufferumrichter 8 ist eine rotierende Schwungmasse 9 zum bidirektionalen Energieaustausch an den Gleichspannungszwischenkreis 1 angekoppelt.

Über den Pufferumrichter 8 wird also nach Bedarf aus dem Gleichspannungszwischenkreis 1 elektrische Energie ausgekoppelt und damit die Schwungmasse 9 beschleunigt oder umgekehrt die Schwungmasse 9 abgebremst und elektrische Energie in den Gleichspannungszwischenkreis 1 eingespeist. Das Beschleunigen und Abbremsen der Schwungmasse 9 erfolgt im Gegentakt zum zeitlichen Verlauf der momentanen Leistungsanforderung P*. Dadurch kann die mittlere Leistungsentnahme aus dem Versorgungsnetz 4 in etwa konstant gehalten werden.

Die rotierende Schwungmasse 9 kann entsprechend der Darstellung in FIG 1 eine eigenständige Schwungmasse sein, die an eine elektrische Maschine angeflanscht ist. Alternativ ist es möglich, dass die Schwungmasse 9 mit dem Rotor der elektrischen Maschine selbst identisch ist. Insbesondere in diesem Fall kann die elektrische Maschine als Außenläufermotor ausgebildet sein.

Der Zwischenkreisumrichter weist weiterhin eine Steuereinrichtung 10 auf. Die Steuereinrichtung 10 ist in der Regel als softwareprogrammierbare Steuereinrichtung ausgebildet. Ihre Wirkungsweise wird durch ein entsprechendes Systemprogramm 11 bestimmt. Das Systemprogramm 11 umfasst Maschinencode 12, der von der Steuereinrichtung 10 unmittelbar abarbeitbar ist. Das Systemprogramm 11 ist von einem Benutzer des Zwischenkreisumrichters in der Regel nicht änderbar. Das Systemprogramm 11 bestimmt insbesondere das Zusammenwirken der verschiedenen Umrichter 3, 5, 8 des Zwischenkreisumrichters.

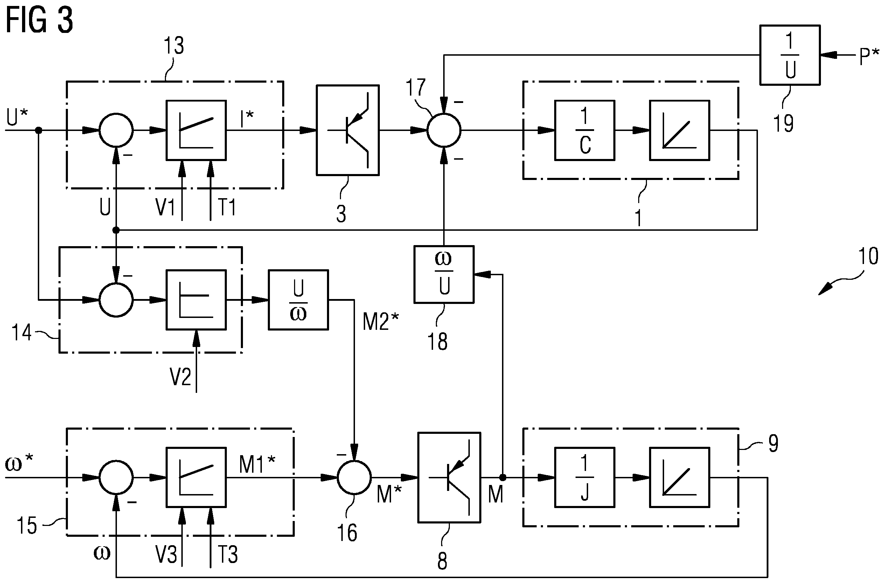

FIG 3 zeigt die interne Struktur der Steuereinrichtung 10. Gemäß FIG 3 implementiert die Steuereinrichtung 10 verschiedene Regler 13 bis 15, nämlich einen ersten Spannungsregler 13, einen zweiten Spannungsregler 14 und einen Drehzahlregler 15.

Dem ersten Spannungsregler 13 werden eine Sollspannung U* und die Istspannung U des Zwischenkreises, d.h. die über dem Zwischenkreiskondensator 2 abfallende Spannung U, zugeführt. Die Sollspannung U* kann zeitvariabel sein. In der Regel ist sie jedoch konstant. Anhand der Sollspannung U* und der Istspannung U ermittelt der erste Spannungsregler 13 einen Sollstrom I* für den Speiseumrichter 3. Der Speiseumrichter 3 wird entsprechend dem Sollstrom I* angesteuert.

Dem Drehzahlregler 15 werden eine Solldrehzahl ω* und eine Istdrehzahl ω der Schwungmasse 9 zugeführt. Die Solldrehzahl ω* kann zeitvariabel oder konstant sein. Falls die Solldrehzahl ω* variabel ist, variiert sie gegenläufig zur momentanen Leistungsanforderung P*. Anhand der Solldrehzahl ω* und der Istdrehzahl ω ermittelt der Drehzahlregler 15 einen ersten Sollmomentanteil M1* für die Schwungmasse 9.

Dem zweiten Spannungsregler 14 werden - analog zum ersten Spannungsregler 13 - die Sollspannung U* und die Istspannung zugeführt. Anhand der Sollspannung U* und der Istspannung U ermittelt der zweite Spannungsregler 14 einen zweiten Sollmomentanteil M2* für die Schwungmasse 9.

Der erste und der zweite Sollmomentanteil M1*, M2* werden einem Knotenpunkt 16 zugeführt. Dort werden die Sollmomentanteile M1*, M2* zu einem Sollmoment M* addiert. Der Pufferumrichter 8 wird entsprechend dem im Knotenpunkt 16 ermittelten Sollmoment M* angesteuert. Die Schwungmasse 9, deren Trägheitsmoment in FIG 3 mit dem Bezugszeichen J versehen ist, wird daher mit einem entsprechenden Istmoment M beschleunigt oder verzögert.

In einem Knotenpunkt 17 werden zusätzlich zum Sollstrom I* die Einflüsse des Soll- oder Istmoments M*, M (vorzugsweise des Istmoments M) der Schwungmasse 9 und der momentanen Leistungsanforderung P* auf den Gleichspannungszwischenkreis 1 berücksichtigt.

Das Moment M der Schwungmasse 9 und die momentane Leistungsanforderung P* der Nutzlast 6 müssen vor dem Berücksichtigen geeignet skaliert werden. Dies geschieht in Blöcken 18, 19. Der jeweilige Skalierungsfaktor ω/U bzw. 1/U ist im jeweiligen Block 18, 19 angegeben.

Der erste Spannungsregler 13 ist entsprechend der Darstellung von FIG 3 vorzugsweise als PI-Regler ausgebildet. Er weist eine Proportionalverstärkung V1 und eine Nachstellzeit T1 auf. Da der erste Spannungsregler 13 auf kurzzeitige Schwankungen der Istspannung U (d.h. auf Schwankungen innerhalb der Periode T) nur in begrenztem Umfang reagieren soll, ist der erste Spannungsregler 13 relativ schwach parametriert. Insbesondere kann die Proportionalverstärkung V1 einen relativ kleinen Wert aufweisen. Weiterhin sollte die Nachstellzeit T1 einen relativ großen Wert aufweisen. Insbesondere sollten die Proportionalverstärkung V1 und die Nachstellzeit T1 derart bestimmt sein, dass der erste Spannungsregler 13 einen Sollwertsprung während einer (1) Periode T nur zu einem geringen Teil ausregelt, beispielsweise zu 5 % bis 20 % oder maximal 25 %.

Der zweite Spannungsregler 14 ist entsprechend der Darstellung von FIG 3 vorzugsweise als P-Regler ausgebildet. Er weist eine Proportionalverstärkung V2 auf. Die Proportionalverstärkung V2 des zweiten Spannungsreglers 14 sollte relativ groß sein, damit der zweite Spannungsregler 14 auch auf kurzfristige Schwankungen der Istspannung U reagiert. Insbesondere sollte die Proportionalverstärkung V2 derart bestimmt sein, dass der zweite Spannungsregler 14 einen Sollwertsprung während eines Teils der Periode T - maximal der Hälfte der Periode T - zu einem Großteil ausregelt, d.h. zu mindestens 50 %, besser zu mindestens 70 % oder mehr.

Der Drehzahlregler 15 ist - analog zum ersten Spannungsregler 13 - ebenfalls als PI-Regler ausgebildet. Er weist eine Proportionalverstärkung V3 und eine Nachstellzeit T3 auf. Analog zum ersten Spannungsregler 13 muss der Drehzahlregler 15 relativ schwach parametriert sein. Insbesondere gelten für den Drehzahlregler 15 die gleichen Auslegungskriterien wie für den ersten Spannungsregler 13.

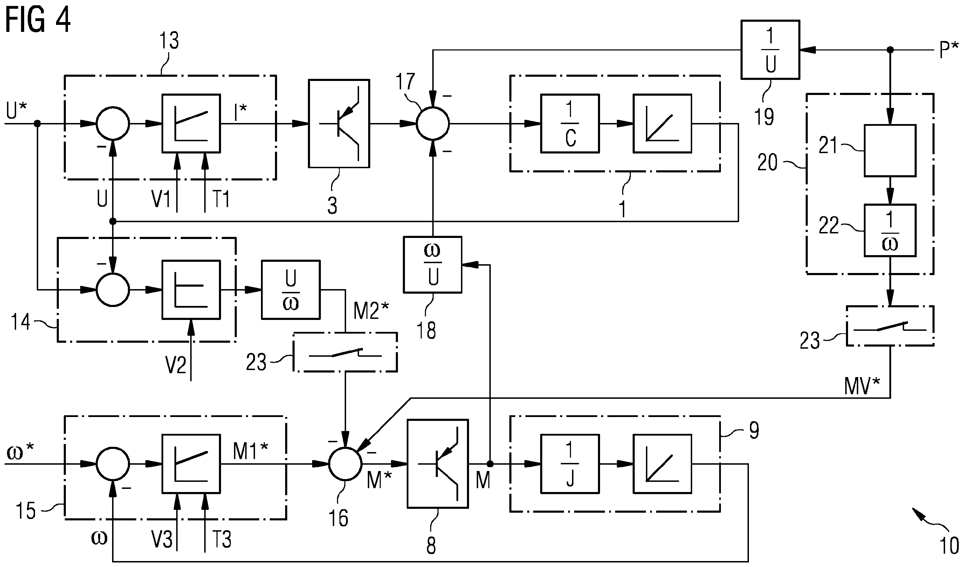

In einer bevorzugten Ausgestaltung der Steuereinrichtung 10 implementiert die Steuereinrichtung 10 gemäß FIG 4 zusätzlich einen Vorsteuerkreis 20. Der Vorsteuerkreis 20 weist ein Hochpassfilter 21 auf. Dem Hochpassfilter 21 wird die momentane Leistungsanforderung P* zugeführt. Im Hochpassfilter 21 wird die momentane Leistungsanforderung P* hochpassgefiltert. Anhand der hochpassgefilterten momentanen Leistungsanforderung ermittelt der Vorsteuerkreis 20 ein Vorsteuersignal MV*. Insbesondere wird die gefilterte momentane Leistungsanforderung in einem Block 22 geeignet skaliert. Der Skalierungsfaktor 1/w ist im Block 22 angegeben.

Das Vorsteuersignal MV* wird gemäß FIG 4 dem Knotenpunkt 16 zugeführt und dort zum ersten und zweiten Sollmomentanteil M1*, M2* addiert. Das Vorsteuersignal MV* geht somit additiv in das Sollmoment M* ein.

Es ist möglich, dass entsprechend der Darstellung von FIG 4 sowohl der zweite Spannungsregler 14 als auch der Vorsteuerkreis 20 permanent aktiv sind. Alternativ ist es möglich, dass dies nur in einem ersten Betriebszustand der Steuereinrichtung 10 der Fall ist. In diesem Fall kann in einem zweiten Betriebszustand der Steuereinrichtung 10 eines der beiden genannten Elemente 14, 20 - also entweder der zweite Spannungsregler 14 oder der Vorsteuerkreis 20, nicht aber der zweite Spannungsregler 14 und der Vorsteuerkreis 20 - deaktiviert sein. Das jeweils andere Element 20, 14 ist auch im zweiten Betriebszustand der Steuereinrichtung 10 aktiviert. Die Möglichkeit der Deaktivierung der Elemente 14, 20 ist in FIG 4 durch entsprechende, gestrichelt dargestellte Schalter 23 angedeutet. Der erste Betriebszustand der Steuereinrichtung 10, in dem sowohl der erste Spannungsregler 14 als auch der Vorsteuerkreis 20 aktiviert sind, kann insbesondere der laufende Betrieb des Zwischenkreisumrichters sein. Der zweite Betriebszustand der Steuereinrichtung 10, in dem eines der genannten Elemente 14, 20 deaktiviert ist, kann insbesondere der Anlauf des Zwischenkreisumrichters sein.

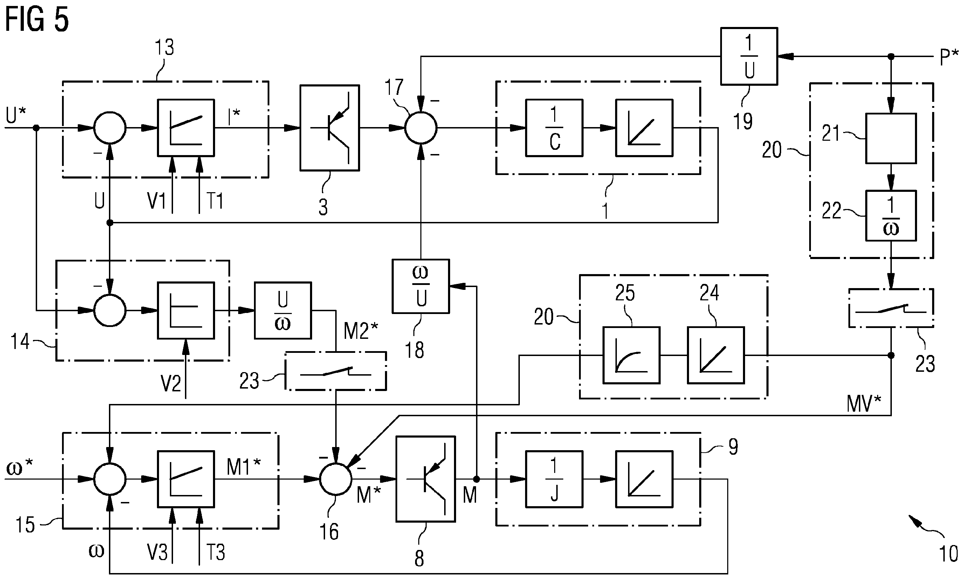

Falls der Vorsteuerkreis 20 vorhanden ist, ist es möglich, die Vorsteuerung entsprechend der Darstellung von FIG 4 auf die unmittelbare Momentenvorsteuerung zu begrenzen. Alternativ ist es gemäß FIG 5 möglich, dass der Vorsteuerkreis 20 zusätzlich einen Integrator 24 und ein Verzögerungsglied 25 umfasst. Das Verzögerungsglied 25 ist in diesem Fall dem Integrator 24 nachgeschaltet. In diesem Fall wird das Vorsteuersignal MV* - zusätzlich zum Aufschalten im Knotenpunkt 16 - dem Integrator 24 zugeführt und dort integriert. Sodann wird das Ausgangssignal des Integrators 24 dem Verzögerungsglied 25 zugeführt und dort um eine Verzögerungszeit verzögert. Das integrierte und zeitverzögerte Vorsteuersignal wird dem Drehzahlregler 15 als zusätzliches Eingangssignal zugeführt.

Die Verzögerung des Verzögerungsgliedes 25 ist derart bestimmt, dass sie die real auftretende Verzögerung kompensiert, d.h. diejenige Zeitdauer, die zwischen dem Aufschalten des Vorsteuersignals MV* am Knotenpunkt 16 und der dadurch bewirkten Änderung der Istdrehzahl ω vergeht.

Der Drehzahlregler 15 kann bei der Ausgestaltung von FIG 5 analog zu den Ausgestaltungen der FIG 3 und 4 parametriert sein. Im Gegensatz zu den Ausgestaltungen der FIG 3 und 4 ist es bei der Ausgestaltung gemäß FIG 5 jedoch alternativ möglich, den Drehzahlregler 15 stärker zu parametrieren. Insbesondere ist es bei der Ausge¬staltung gemäß FIG 5 möglich, dass die Proportionalverstärkung V3 und die Nachstellzeit T3 des Drehzahlreglers 15 derart bestimmt sind, dass der Drehzahlregler 15 - analog zum zweiten Spannungsregler 14 - einen Sollwertsprung während eines Teils der Periode T zu einem Großteil ausregelt.

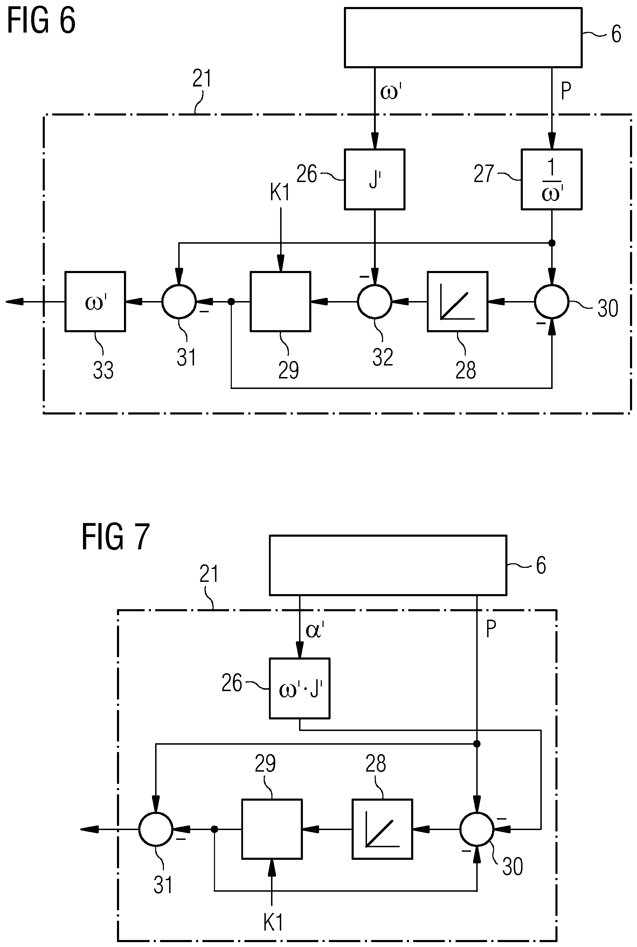

Zur Realisierung des Hochpassfilters 21 der FIG 4 und 5 kann die Steuereinrichtung 10 beispielsweise eine Struktur implementieren, wie sie nachfolgend in Verbindung mit FIG 6 erläutert wird.

Gemäß FIG 6 werden die momentane Leistung P und die momentane Drehzahl ω' der Nutzlast 6 (bzw. des entsprechenden elektrischen Antriebs) erfasst. Die Drehzahl ω' wird in einem Block 26 mit dem wirksamen Trägheitsmoment J' der Nutzlast 6 skaliert, die momentane Leistung P in einem Block 27 mit der momentanen Drehzahl ω'. Die skalierten Größen werden weiter verarbeitet.

Das Hochpassfilter 21 weist einen Integrator 28 und einen Mittelwertbildner 29 auf. Vor dem Integrator 28, hinter dem Mittelwertbildner 29 und zwischen dem Integrator 28 und dem Mittelwertbildner 29 befindet sich jeweils ein Knotenpunkt 30 bis 32.

Dem Knotenpunkt 30 vor dem Integrator 28 werden die skalierte momentane Leistung und (mit negativem Vorzeichen) das Ausgangssignal des Mittelwertbildners 29 zugeführt. Dem Knotenpunkt 32 zwischen dem Integrator 28 und dem Mittelwertbildner 29 werden zum einen das Ausgangssignal des Integrators 28 und zum anderen (mit negativem Vorzeichen) die skalierte Drehzahl ω' zugeführt. Dem Knotenpunkt 31 hinter dem Mittelwertbildner 29 werden die skalierte momentane Leistung und (mit negativem Vorzeichen) das Ausgangssignal des Mittelwertbildners 29 zugeführt. Das sich am Knotenpunkt 31 ergebende Signal wird in einem Block 33 mit der momentanen Drehzahl ω' der Nutzlast 6 skaliert.

Der Mittelwertbildner 29 mittelt das ihm zugeführte Eingangssignal mit einer Zeitkonstanten K1. Die Zeitkonstante K1 ist frei wählbar. Durch sie wird das Frequenzverhalten des Hochpassfilters 21 eingestellt. Vorzugsweise ist die Zeitkonstante K1 größer als die Periode T. Insbesondere kann das Verhältnis der beiden Größen K1, T zwischen zwei und zehn liegen.

Bei der Ausgestaltung gemäß FIG 6 wird das Nutzlastmoment hochpassgefiltert. Vorteilhafter ist es, gemäß FIG 7 direkt die Nutzleistung heranzuziehen. Bei FIG 7 wird anstelle der Drehzahl ω' der Nutzlast 6 die Drehbeschleunigung α' der Nutzlast 6 verwertet. Im Übrigen ist die Struktur des Hochpassfilters 21 aus FIG 7 ersichtlich. Die verwendeten Bezugszeichen und Größen korrespondieren mit denen von FIG 6.

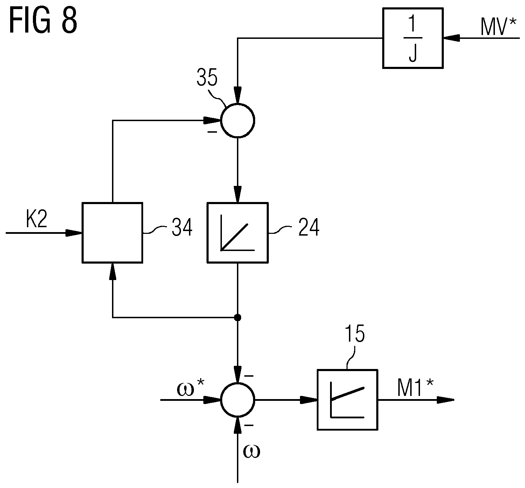

Zur Realisierung des Integrators 24 nebst nachgeschaltetem Verzögerungsglied 25 von FIG 5 kann die Steuereinrichtung 10 beispielsweise eine Struktur implementieren, wie sie nachfolgend in Verbindung mit FIG 8 näher erläutert wird.

Gemäß FIG 8 ist dem Integrator 24 ein Mittelwertbildner 34 parallel gegengeschaltet. Weiterhin ist dem Integrator 24 ein Knotenpunkt 35 vorgeordnet. Dem Knotenpunkt 35 werden das Vorsteuersignal MV* und (mit negativem Vorzeichen) das Ausgangssignal des Mittelwertbildners 34 zugeführt. Das Ausgangssignal des Integrators 24 wird einerseits dem Drehzahlregler 15 als zusätzliches Eingangssignal zugeführt und andererseits dem Mittelwertbildner 34 als dessen Eingangssignal zugeführt.

Der Mittelwertbildner 34 entspricht einer Realisierung des Verzögerungsgliedes 25 von FIG 5. Er mittelt das ihm zugeführte Eingangssignal mit einer Zeitkonstanten K2. Die Zeitkonstante K2 ist frei wählbar. Durch sie wird die Zeitverzögerung des Verzögerungsgliedes 25 eingestellt.

Die vorliegende Erfindung weist verschiedene Vorteile auf. Insbesondere ist sie leicht zu implementieren, arbeitet zuverlässig und liefert überlegene Ergebnisse.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Steuereinrichtung für einen Zwischenkreisumrichter,
- wobei der Zwischenkreisumrichter einen Gleichspannungszwischenkreis (1) aufweist, in dem ein Zwischenkreiskondensator (2) angeordnet ist,
- wobei der Zwischenkreisumrichter mindestens einen Speiseumrichter (3) aufweist, über den aus einem Versorgungsnetz (4) elektrische Energie in den Gleichspannungszwischenkreis (1) eingespeist wird,
- wobei der Zwischenkreisumrichter mindestens einen Lastumrichter (5) aufweist, über den einer Nutzlast (6) aus dem Gleichspannungszwischenkreis (1) elektrische Energie zugeführt wird,
- wobei der Zwischenkreisumrichter mindestens einen Pufferumrichter (8) aufweist, über den eine rotierende Schwungmasse (9) zum bidirektionalen Energieaustausch an den Gleichspannungszwischenkreis (1) angekoppelt ist,
- wobei die Steuereinrichtung den Speiseumrichter (3), den Lastumrichter (5) und den Pufferumrichter (8) steuert, **dadurch gekennzeichnet dass**,
- wobei die Steuereinrichtung einen ersten Spannungsregler (13) implementiert, in dem anhand einer Sollspannung (U*) und einer über dem Zwischenkreiskondensator (2) abfallenden Istspannung (U) ein Sollstrom (I*) für den Speiseumrichter (3) ermittelt wird und von dem der Speiseumrichter (3) entsprechend angesteuert wird,
- wobei die Steuereinrichtung einen Drehzahlregler (15) implementiert, in dem anhand einer Solldrehzahl (ω*) und einer Istdrehzahl (ω) der Schwungmasse (9) ein erster Sollmomentanteil (M1*) für die Schwungmasse (9) ermittelt wird,
- wobei die Steuereinrichtung einen zweiten Spannungsregler (14) implementiert, in dem anhand der Sollspannung (U*) und der Istspannung (U) ein zweiter Sollmomentanteil (M2*) für die Schwungmasse (9) ermittelt wird,
- wobei der erste und der zweite Sollmomentanteil (M1*, M2*) zu einem Sollmoment (M*) addiert werden und der Pufferumrichter (8) entsprechend angesteuert wird.

2. Steuereinrichtung nach Anspruch 1, **dadurch gekennzeichnet,**
- **dass** die momentane Leistungsanforderung (P*) mit einer Periode (T) zwischen einem Minimalwert (Pmin) und einem Maximalwert (Pmax) oszilliert,
- **dass** der erste Spannungsregler (13) als PI-Regler ausgebildet ist, der eine Proportionalverstärkung (V1) und eine Nachstellzeit (T1) aufweist, und
- **dass** die Proportionalverstärkung (V1) und die Nachstellzeit (T1) des ersten Spannungsreglers (13) derart bestimmt sind, dass der erste Spannungsregler (13) einen Sollwertsprung während einer Periode (T) nur zu einem geringen Teil ausregelt.

3. Steuereinrichtung nach Anspruch 1 oder 2, **dadurch gekennzeichnet, dass** der zweite Spannungsregler (14) als P-Regler ausgebildet ist und dass eine Proportionalverstärkung (V2) des zweiten Spannungsreglers (14) derart bestimmt ist, dass der zweite Spannungsregler (14) einen Sollwertsprung während eines Teils einer Periode (T) zu einem Großteil ausregelt.

4. Steuereinrichtung nach Anspruch 1, 2 oder 3, **dadurch gekennzeichnet,**
- **dass** die Steuereinrichtung zusätzlich einen Vorsteuerkreis (20) implementiert,
- **dass** dem Vorsteuerkreis (20) die momentane Leistungsanforderung (P*) zugeführt wird,
- **dass** der Vorsteuerkreis (20) die momentane Leistungsanforderung (P*) hochpassfiltert und
- **dass** der Vorsteuerkreis (20) anhand der hochpassgefilterten momentanen Leistungsanforderung ein Vorsteuersignal (MV*) ermittelt, das zusätzlich zum ersten und zweiten Sollmomentanteil (M1*, M2*) additiv in das Sollmoment (M*) eingeht.

5. Steuereinrichtung nach Anspruch 4, **dadurch ge- kennzeichnet**, dass die Steuereinrichtung derart ausgebildet ist, dass in einem ersten Betriebszustand der Steuereinrichtung sowohl der zweite Spannungsregler (14) als auch der Vorsteuerkreis (20) aktiviert sind und in einem zweiten Betriebszustand der Steuereinrichtung alternativ der zweite Spannungsregler (14) aktiviert ist und der Vorsteuerkreis (20) deaktiviert ist oder der zweite Spannungsregler (14) deaktiviert ist und der Vorsteuerkreis (20) aktiviert ist.

6. Steuereinrichtung nach Anspruch 5, **dadurch gekennzeichnet, dass** der erste Betriebszustand der Steuereinrichtung der laufende Betrieb des Zwischenkreisumrichters und der zweite Betriebszustand der Steuereinrichtung der Anlauf des Zwischenkreisumrichters sind.

7. Steuereinrichtung nach Anspruch 4, 5 oder 6, **dadurch gekennzeichnet,**
- **dass** der Vorsteuerkreis (20) zusätzlich einen Integrator (24) und ein dem Integrator (24) nachgeschaltetes Verzögerungsglied (25) umfasst,
- **dass** das Vorsteuersignal (MV*) dem Integrator (24) zugeführt wird und
- **dass** das integrierte und zeitverzögerte Vorsteuersignal dem Drehzahlregler (15) als zusätzliches Eingangssignal zugeführt wird.

8. Steuereinrichtung nach Anspruch 7, **dadurch gekennzeichnet,**
- **dass** die momentane Leistungsanforderung (P*) mit einer Periode (T) zwischen einem Minimalwert (Pmin) und einem Maximalwert (Pmax) oszilliert,
- **dass** der Drehzahlregler (15) als PI-Regler ausgebildet ist, der eine Proportionalverstärkung (V3) und die Nachstellzeit (T3) aufweist, und
- **dass** die Proportionalverstärkung (V3) und die Nachstellzeit (T3) des Drehzahlreglers (15) derart bestimmt sind, dass der Drehzahlregler (15) einen Sollwertsprung während eines Teils einer Periode (T) zu einem Großteil ausregelt.

9. Steuereinrichtung nach einem der Ansprüche 1 bis 7, **dadurch gekennzeichnet,**
- **dass** die momentane Leistungsanforderung (P*) mit einer Periode (T) zwischen einem Minimalwert (Pmin) und einem Maximalwert (Pmax) oszilliert,
- **dass** der Drehzahlregler (15) als PI-Regler ausgebildet ist, der eine Proportionalverstärkung (V3) und die Nachstellzeit (T3) aufweist, und
- **dass** die Proportionalverstärkung (V3) und die Nachstellzeit (T3) des Drehzahlreglers (15) derart bestimmt sind, dass der Drehzahlregler (15) einen Sollwertsprung während einer Periode (T) nur zu einem geringen Teil ausregelt.

10. Zwischenkreisumrichter,
- wobei der Zwischenkreisumrichter einen Gleichspannungszwischenkreis (1) aufweist, in dem ein Zwischenkreiskondensator (2) angeordnet ist,
- wobei der Zwischenkreisumrichter mindestens einen Speiseumrichter (3) aufweist, über den aus einem Versorgungsnetz (4) elektrische Energie in den Gleichspannungszwischenkreis (1) eingespeist wird,
- wobei der Zwischenkreisumrichter mindestens einen Lastumrichter (5) aufweist, über den einer Nutzlast (6) aus dem Gleichspannungszwischenkreis (1) elektrische Energie zugeführt wird,
- wobei der Zwischenkreisumrichter mindestens einen Pufferumrichter (8) aufweist, über den eine rotierende Schwungmasse (9) zum bidirektionalen Energieaustausch an den Gleichspannungszwischenkreis (1) angekoppelt ist,
- wobei der Zwischenkreisumrichter eine Steuereinrichtung (10) aufweist, die den Speiseumrichter (3), den Lastumrichter (5) und den Pufferumrichter (8) steuert,
- wobei die Steuereinrichtung (10) nach einem der obigen Ansprüche ausgebildet ist.

## Claims

1. Control device for an intermediate circuit inverter,
- wherein the intermediate circuit inverter has a DC voltage intermediate circuit (1) in which an intermediate circuit capacitor (2) is arranged,
- wherein the intermediate circuit inverter has at least one feed inverter (3), by way of which electrical energy from a supply network (4) is fed into the DC voltage intermediate circuit (1),
- wherein the intermediate circuit inverter has at least one load inverter (5), by way of which electrical energy is supplied to a payload (6) from the DC voltage intermediate circuit (1),
- wherein the intermediate circuit inverter has at least one buffer inverter (8), by way of which a rotating centrifugal mass (9) for bidirectional energy exchange is coupled to the DC voltage intermediate circuit (1),
- wherein the control device controls the feed inverter (3), the load inverter (5) and the buffer inverter (8), **characterised in that**
- the control device implements a first voltage control (13), in which, on the basis of a rated voltage (U*) and an actual voltage (U) which drops across the intermediate circuit capacitor (2), a target current (I*) is determined for the feed inverter (3) and by which the feed inverter (3) is controlled accordingly,
- wherein the control device implements a speed control (15), in which, on the basis of a rated speed (ω*) and an actual speed (ω) of the centrifugal mass (9), a first rated torque portion (M1*) is determined for the centrifugal mass (9),
- wherein the control device implements a second voltage control (14), in which, on the basis of the rated voltage (U*) and the actual voltage (U), a second rated torque portion (M2*) is determined for the centrifugal mass (9),
- wherein the first and the second rated torque portion (M1*, M2*) are added to a rated torque (M*) and the buffer inverter (8) is controlled accordingly.

2. Control device according to claim 1, **characterised in that**,
- the momentary performance requirement (P*) with a period (T) oscillates between a minimum value (Pmin) and a maximum value (Pmax),
- the first voltage control (13) is embodied as a PI controller, which has a proportional amplification (V1) and a reset time (T1), and
- the proportional amplification (V1) and the reset time (T1) of the first voltage control (13) are determined such that during a period (T) the first voltage control (13) only regulates a setpoint jump to a small extent.

3. Control device according to claim 1 or 2, **characterised in that** the second voltage control (14) is embodied as a P-controller and that a proportional amplification (V2) of the second voltage control (14) is determined such that during part of a period (T) the second voltage control (14) regulates a setpoint jump to a large extent.

4. Control device according to claim 1, 2 or 3, **characterised in that**,
- the control device additionally implements a pilot circuit (20),
- the momentary power requirement (P*) is supplied to the pilot circuit (20),
- the pilot circuit (20) high-pass filters the momentary power requirement (P*) and
- on the basis of the high-pass filtered momentary power requirement, the pilot circuit (20) determines a pilot signal (MV*), which, in addition to the first and second rated torque portion (M1*, M2*), is also incorporated in the rated torque (M*).

5. Control device according to claim 4, **characterised in that** the control device is embodied such that in a first operating state of the control device, both the second voltage control (14) and also the pilot circuit (20) are activated and in a second operating state of the control device the second voltage control (14) is alternatively activated and the pilot circuit (20) is deactivated or the second voltage control (14) is deactivated and the pilot circuit (20) is activated.

6. Control device according to claim 5, **characterised in that** the first operating state of the control device is the ongoing operation of the intermediate circuit inverter and the second operating state of the control device is the start-up of the intermediate circuit inverter.

7. Control device according to claim 4, 5 or 6, **characterised in that**,
- the pilot circuit (20) additionally comprises an integrator (24) and a delay element (25) which is arranged downstream of the integrator (24),
- the pilot signal (MV*) is supplied to the integrator (24) and
- the integrated and time-delayed pilot signal is fed to the speed control (15) as an additional input signal.

8. Control device according to claim 7, **characterised in that**,
- the momentary performance requirement (P*) with a period (T) oscillates between a minimum value (Pmin) and a maximum value (Pmax),
- the speed control (15) is embodied as a PI controller, which has a proportional amplification (V3) and the reset time (T3), and
- the proportional amplification (V3) and the reset time (T3) of the speed control (15) are determined such that during a part of a period (T) the speed control (15) regulates a setpoint jump to a small extent.

9. Control device according to one of claims 1 to 7, **characterised in that**,
- the momentary performance requirement (P*) with a period (T) oscillates between a minimum value (Pmin) and a maximum value (Pmax),
- the speed control (15) is embodied as a PI controller, which has a proportional amplification (V3) and the reset time (T3), and
- the proportional amplification (V3) and the reset time (T3) of the speed control (15) are determined such that during a period (T) the speed control (15) only regulates a setpoint jump to a small extent.

10. Intermediate circuit inverter,
- wherein the intermediate circuit inverter has a DC voltage intermediate circuit (1) in which an intermediate circuit capacitor (2) is arranged,
- wherein the intermediate circuit inverter has at least one feed inverter (3), by way of which electrical energy from a supply network (4) is fed into the DC voltage intermediate circuit (1),
- wherein the intermediate circuit inverter has at least one load inverter (5), by way of which electrical energy is supplied to a payload (6) from the DC voltage intermediate circuit (1),
- wherein the intermediate circuit inverter has at least one buffer inverter (8), by way of which a rotating centrifugal mass (9) for bidirectional energy exchange is coupled to the DC voltage intermediate circuit (1),
- wherein the intermediate circuit inverter has a control device (10) which controls the feed inverter (3), the load inverter (5) and the buffer inverter (8),
- wherein the control device (10) is embodied according to one of the above claims.

## Revendications

1. Dispositif de commande d'un convertisseur de circuit intermédiaire,
- dans lequel le convertisseur de circuit intermédiaire a un circuit (1) intermédiaire à tension continue, dans lequel est monté un condensateur (2) de circuit intermédiaire,
- dans lequel le convertisseur de circuit intermédiaire a au moins un convertisseur (3) d'alimentation, par lequel de l'énergie électrique est injectée d'un réseau (4) d'alimentation dans le circuit (1) intermédiaire à tension continue,
- dans lequel le convertisseur de circuit intermédiaire a au moins un convertisseur (5) de charge, par lequel de l'énergie électrique est envoyée du circuit (1) intermédiaire à tension continue à une charge (6) utile,
- dans lequel le convertisseur de circuit intermédiaire a au moins un convertisseur (8) tampon, par lequel une masse (9) tournante d'équilibrage est, pour l'échange d'énergie bidirectionnelle, couplée au circuit (1) intermédiaire à tension continue,
- dans lequel le dispositif de commande commande le convertisseur (3) d'alimentation, le convertisseur (5) de charge et le convertisseur (8) tampon,
- **caractérisé en ce que** le dispositif de commande met en oeuvre un premier régleur (13) de tension, dans lequel, à l'aide d'une tension (U*) de consigne et d'une tension (U) réelle, chutant aux bornes du condensateur (2) de circuit intermédiaire, un courant (I*) de consigne, pour le convertisseur (3) d'alimentation, est déterminé et par lequel le convertisseur (3) d'alimentation est commandé en conséquence,
- dans lequel le dispositif de commande met en oeuvre un régleur (15) de vitesse de rotation, dans lequel, à l'aide d'une vitesse (ω*) de rotation de consigne et d'une vitesse (ω) de rotation réelle de la masse (9) d'équilibrage, une première composante (M1*) de couple de consigne pour la masse (9) d'équilibrage est déterminée,
- dans lequel le dispositif de commande met en oeuvre un deuxième régleur (14) de tension, dans lequel, à l'aide de la tension (U*) de consigne et de la tension (U) réelle, une deuxième composante (M2*) de couple de consigne pour la masse (9) d'équilibrage est déterminée,
- dans lequel la première et la deuxième composantes (M1*, M2*) de couple de consigne sont additionnées en un couple (M*) de consigne et le convertisseur (8) tampon est commandé en conséquence.

2. Dispositif de commande suivant la revendication 1, **caractérisé**
- **en ce que** la demande (P*) instantanée de puissance oscille avec une période (T) entre une valeur (Pmin) minimum et une valeur (Pmax) maximum,
- **en ce que** le premier régleur (13) de tension est constitué en régleur PI, qui a une amplification (V1) proportionnelle et un temps (T1) de correction et
- **en ce que** l'amplification (V1) proportionnelle et le temps (T1) de correction du premier régleur (13) de tension sont déterminés, de manière à ce que le premier régleur (13) de tension régule, seulement pour une partie petite, un saut de valeur de consigne pendant une période (T).

3. Dispositif de commande suivant la revendication 1 ou 2, **caractérisé en ce que** le deuxième régleur (14) de tension est constitué sous la forme d'un régleur P et **en ce qu'**une amplification (V2) proportionnelle du deuxième régleur (14) de tension est déterminée de manière à ce que le deuxième régleur (14) de tension régule, pour une grande partie, un saut de valeur de consigne pendant une partie d'une période (T).

4. Dispositif de commande suivant la revendication 1, 2 ou 3, **caractérisé,**
- **en ce que** le dispositif de commande met en oeuvre en outre un circuit (20) pilote,
- **en ce que** la demande (P*) de puissance instantanée est envoyée au circuit (20) pilote,
- **en ce que** le circuit (20) pilote filtre passe haut la demande (P*) de puissance instantanée et
- **en ce que** le circuit (20) pilote détermine, à l'aide de la demande de puissance instantanée ayant subi un filtrage passe haut, un signal (MV*) pilote, qui entre, supplémentairement à la première et à la deuxième composantes (M1*, M2*) de couple de consigne, additivement dans le couple (M*) de consigne.

5. Dispositif de commande suivant la revendication 4, **caractérisé en ce que** le dispositif de commande est constitué de manière à ce que, dans un premier état de fonctionnement du dispositif de commande, à la fois le deuxième régleur (14) de tension et le circuit (20) pilote soient activés et, dans un deuxième état de fonctionnement du dispositif de commande ou bien, le deuxième régleur (14) de tension soit activé et le circuit (20) pilote soit désactivé ou bien, le deuxième régleur (14) de tension soit désactivé et le circuit (20) pilote soit activé.

6. Dispositif de commande suivant la revendication 5, **caractérisé en ce que** le premier état de fonctionnement du dispositif de commande est le fonctionnement courant du convertisseur de circuit intermédiaire et le deuxième état de fonctionnement du dispositif de commande est le démarrage du convertisseur de circuit intermédiaire.

7. Dispositif de commande suivant la revendication 4, 5 ou 6, **caractérisé,**
- **en ce que** le circuit (20) pilote comprend en outre un intégrateur (24) et un élément (25) de temporisation monté en aval de l'intégrateur (24),
- **en ce que** le signal (MV*) pilote est envoyé à l'intégrateur (24) et
- **en ce que** le signal pilote, intégré et retardé dans le temps, est envoyé au régleur (15) de vitesse de rotation comme signal d'entrée supplémentaire.

8. Dispositif de commande suivant la revendication 7, **caractérisé,**
- **en ce que** la demande (P*) de puissance instantanée oscille avec une période (T) entre une valeur (Pmin) minimum et une valeur (Pmax) maximum,
- **en ce que** le régleur (15) de vitesse de rotation est constitué en régleur PI, qui a une amplification (V3) proportionnelle et le temps (T3) de correction, et
- **en ce que** l'amplification (V3) proportionnelle et le temps (T3) de correction du régleur (15) de vitesse de rotation sont déterminés de manière à ce que le régleur (15) de vitesse de rotation régule, pour une grande partie, un saut de valeur de consigne pendant une partie d'une période (T).

9. Dispositif de commande suivant l'une des revendications 1 à 7, **caractérisé,**
- **en ce que** la demande (P*) de puissance instantanée oscille avec une période (T) entre une valeur (Pmin) minimum et une valeur (Pmax) maximum,
- **en ce que** le régleur (15) de vitesse de rotation est constitué en régleur PI qui a une amplification (V3) proportionnelle et le temps (T3) de correction et
- **en ce que** l'amplification (V3) proportionnelle et le temps (T3) de correction du régleur (15) de vitesse de rotation sont déterminés de manière à ce que le régleur (15) de vitesse de rotation régule, seulement pour une partie petite, un saut de valeur de consigne pendant une période (T).

10. Convertisseur de circuit intermédiaire,
- dans lequel le convertisseur de circuit intermédiaire a un circuit (1) intermédiaire à tension continue, dans lequel est monté un condensateur (2) de circuit intermédiaire,
- dans lequel le convertisseur de circuit intermédiaire a au moins un convertisseur (3) d'alimentation, par lequel de l'énergie électrique est injectée d'un réseau (4) d'alimentation dans le circuit (1) intermédiaire à tension continue,
- dans lequel le convertisseur de circuit intermédiaire a au moins un convertisseur (5) de charge, par lequel de l'énergie électrique est envoyée du circuit (1) intermédiaire à tension continue à une charge (6) utile,
- dans lequel le convertisseur de circuit intermédiaire a au moins un convertisseur (8) tampon, par lequel une masse (9) tournante d'équilibrage est, pour l'échange d'énergie bidirectionnelle, couplée au circuit (1) intermédiaire à tension continue,
- dans lequel le convertisseur de circuit intermédiaire a un dispositif (10) de commande, qui commande le convertisseur (3) d'alimentation, le convertisseur (5) de charge et le convertisseur (8) tampon,
- dans lequel le dispositif (10) de commande est constitué suivant l'une des revendications précédentes.
